# EUROPEAN PATENT APPLICATION

(11) **EP 4 586 361 A1**
(43) Date of publication of application: **16.07.2025**
(21) Application number: 23880012.2
(22) Date of filing: 06.09.2023
(51) Int. Cl.: H01M 10/42, H01M 10/48, H01M 10/651, H01M 10/658, H01M 10/613, H01M 50/569, H01M 50/293, H01M 50/204, H01M 4/525

(54) **BATTERY PACK INCLUDING HETEROGENEOUS BATTERY CELLS**

(30) Priority: 17.10.2022 KR 20220133603; 08.08.2023 KR 20230103738
(71) Applicant: LG Energy Solution, Ltd., Seoul 07335 (KR)
(72) Inventor: LIM, Sung Chul, Daejeon 34122 (KR); HUH, Geun Hoe, Daejeon 34122 (KR); KANG, Su Won, Daejeon 34122 (KR)
(74) Representative: Plasseraud IP
(86) International application number: PCT/KR2023/013338
(87) International publication number: WO 2024/085432

(57) **Abstract**

The present invention relates to a battery pack including different types of battery cells, and more particularly, to a battery pack including: a first battery module including a plurality of first battery cells; a second battery module including a plurality of second battery cells; a pack housing including an accommodation part in which the first battery module and the second battery module are accommodated together; a partition part that defines an inner wall of the accommodation part; and a pack battery management system (BMS) that controls available capacity of the first battery module and available capacity of the second battery module to be the same as or similar to each other, wherein the first battery module is coolable by the second battery module.

## Description

### TECHNICAL FIELD

### CROSS-REFERENCE TO RELATED APPLICATION

The present application claims the benefit of the priority of Korean Patent Application Nos. 10-2022-0133603, filed on October 17, 2022, and 10-2023-0103738, filed on August 8, 2023, which are hereby incorporated by reference in their entirety.

### TECHNICAL FIELD

The present invention relates to a battery pack including different types of battery cells.

### BACKGROUND ART

In general, secondary batteries refer to rechargeable batteries, and may be not only used as energy sources for small-sized home appliances such as mobile phones, notebook computers, and camcorders, but also used as energy sources for transport means such as vehicles. Among these secondary batteries, one of the secondary batteries considered energy sources for vehicles is a lithium secondary battery. The lithium secondary battery generally has high performance, high stability, and the like, and is manufactured by selecting a material according to required properties, for example, battery lifetime, charging or discharging capacities, charging or discharging speed, temperature characteristics, stability, and the like.

In particular, as electric vehicle technology is continuously improved, battery packs that are one of three core components of electric vehicles play an important role in performance of the electric vehicles. Currently, demands for electric vehicles gradually increase, and furthermore, needs for battery energy density gradually increase. Research for increasing the energy density of battery cells in order to increase mileage of the electric vehicles is actively carried out on the battery packs mounted in the electric vehicles. It is well known that when the relative density of nickel is increased in the battery cells, the energy density is generally improved.

However, the batteries in which the relative density of nickel is increased in the battery cells have safety problems caused by severe heat generation. In particular, when a battery pack is manufactured using a battery module including solely the batteries in which the relative density of nickel is increased, heat is generated at the same time in a plurality of battery cells as the battery cells are used. Accordingly, there is a problem that the performance of the battery cells is degraded due to the heat generation.

Thus, there is a need for the technical development to solve the problems as above.

### DISCLOSURE OF THE INVENTION

### TECHNICAL PROBLEM

The present invention is intended to solve the above problems, and the present invention may prevent performance of battery modules from being degraded due to thermal runaway and heat generation by accommodating, in one battery pack, a first battery module and a second battery module, which include different types of battery cells, so that one battery module of the first battery module and the second battery module, which are different in amount of heat generation per unit volume, is cooled by the other battery module, and by controlling the first battery module and the second battery module so that available capacity thereof is maintained at the same or similar levels.

### TECHNICAL SOLUTION

As one embodiment according to the present invention, the present invention provides a battery pack including: a first battery module including a plurality of first battery cells; a second battery module including a plurality of second battery cells; a pack housing including an accommodation part in which the first battery module and the second battery module are accommodated together;
a partition part that defines an inner wall of the accommodation part; and a pack battery management system (BMS) that controls available capacity of the first battery module and available capacity of the second battery module to be the same as or similar to each other, wherein the first battery module is coolable by the second battery module.

In addition, each of the first battery cells may have a more amount of heat generation per unit volume than each of the second battery cells.

In addition, the first battery module may further include a first reference cell in which a first reference electrode is added to the first battery cell, and the pack BMS may be capable of measuring a first reference potential difference of the first reference cell and a first potential difference of the first battery cell.

In addition, the first reference cell may include a first working electrode corresponding to a positive electrode, a first counter electrode corresponding to a negative electrode, and the first reference electrode, and the pack BMS may be capable of calculating the first reference potential difference based on a difference in potential between the first reference electrode and the first working electrode and a difference in potential between the first reference electrode and the first counter electrode.

In addition, the pack BMS may estimate the available capacity of the first battery module based on a deviation between the first reference potential difference and the first potential difference.

In addition, the first battery module may further include a second reference cell in which a second reference electrode is added to the second battery cell, and the pack BMS may be capable of measuring a second reference potential difference of the second reference cell and a second potential difference of the second battery cell.

In addition, the second reference cell may include a second working electrode corresponding to a positive electrode, a second counter electrode corresponding to a negative electrode, and the second reference electrode, and the pack BMS may be capable of calculating the second reference potential difference based on a difference in potential between the second reference electrode and the second working electrode and a difference in potential between the second reference electrode and the second counter electrode.

In addition, the pack BMS may estimate the available capacity of the second battery module based on a deviation between the second reference potential difference and the second potential difference.

In addition, a positive electrode active material of the first battery cell may include nickel, cobalt, and manganese materials, and a positive electrode active material of the second battery cell may include lithium, phosphate, and iron materials.

In addition, the positive electrode active material of the second battery cell may not include nickel.

In addition, the first battery module and the second battery module, which are accommodated in the accommodation part, may have respective surfaces facing each other that are in contact with each other.

In addition, each of the surfaces, which are in contact with each other, of the first battery module and the second battery module may be coated with a thermally conductive compound.

In addition, each of the surfaces, which are in contact with each other, of the first battery module and the second battery module may include a heat dissipating material.

In addition, the heat dissipating material may be a ceramic or synthetic resin.

In addition, a pair of the first battery module and the second battery module may be accommodated in the accommodation part.

In addition, the accommodation part may be provided in plurality, and the partition part may partition the plurality of accommodation parts from each other.

In addition, the partition part may be made of a thermal insulation material.

In addition, the partition part may include: a first partition unit disposed to be parallel to a longitudinal direction of the first or second battery module; and a second partition unit disposed in a direction perpendicular to the first partition unit.

In addition, the first battery module and the second battery module, which are disposed in different accommodation parts facing each other on the basis of the partition part, may be disposed to face each other.

### ADVANTAGEOUS EFFECTS

The present invention may prevent the performance of the battery modules from being degraded due to the thermal runaway and the heat generation by accommodating the first battery module and the second battery module, which include the different types of the battery cells, in the one space so that the battery modules are cooled through the heat exchange therebetween, and by controlling the first battery module and the second battery module so that the available capacity thereof is maintained at the same or similar levels.

### BRIEF DESCRIPTION OF THE DRAWINGS

FIG. 1 is a schematic plan view illustrating a structure of a battery pack according to an embodiment of the present invention.
FIG. 2 is a schematic plan view illustrating configurations of (a) a first battery cell, (b) a first reference cell, (c) a second battery cell, and (d) a second reference cell according to an embodiment of the present invention.
FIG. 3 is a block diagram illustrating a battery pack according to an embodiment of the present invention.
FIG. 4 is a block diagram illustrating a pack BMS according to an embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

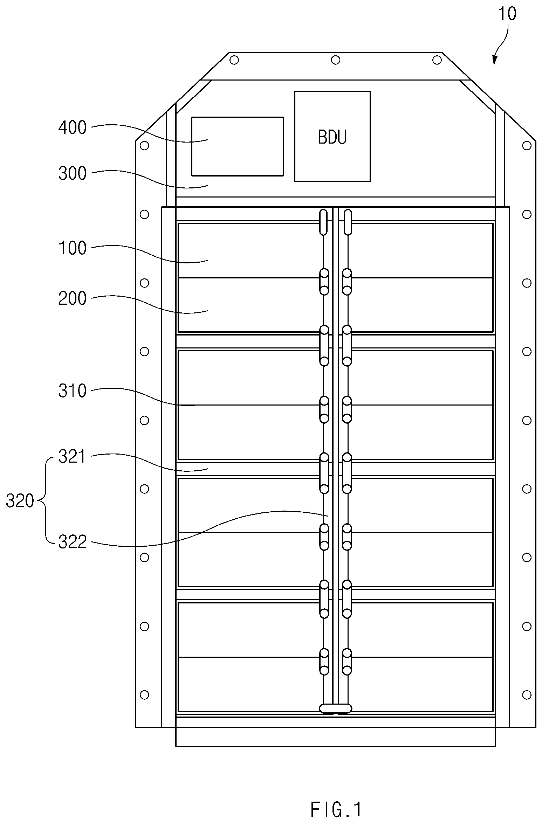

Referring to FIG. 1, the present invention relates to a battery pack 10 including different types of battery cells as one embodiment according to present invention, and the battery pack 10 may include a first battery module 100, a second battery module 200, a pack housing 300, and a pack battery management system (BMS).

The first battery module 100 may include a plurality of first battery cells 110. The plurality of first battery cells 110 may be stacked and disposed in an inner space of the first battery module 100.

The second battery module 200 may include a plurality of second battery cells 210. The plurality of second battery cells 210 may be stacked and disposed in an inner space of the second battery module 200.

Each of the first battery cells 110 and the second battery cells 210 may be provided as various types such as a pouch type, a prismatic type, or a cylindrical type.

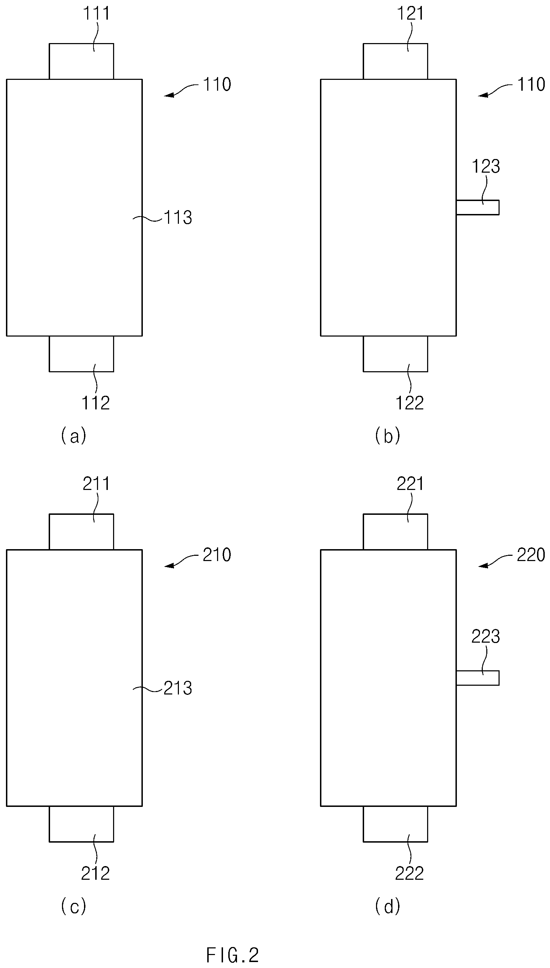

Referring to (a) of FIG. 2, the first battery cell 110 may include a first electrode assembly, a first pouch type case 113, a first positive electrode lead 111, and a first negative electrode lead 112. Each of the first positive electrode lead 111 and the first negative electrode lead 112 may have a structure protruding from the first pouch type case 113 to the outside, and the first positive electrode lead 111 and the first negative electrode lead 112 may protrude from one side surface of the first pouch type case 113 together, or from one side surface and the other side surface, respectively.

The first electrode assembly may have a structure in which a positive electrode current collector/a positive electrode active material layer/a separator/a negative electrode active material layer/a negative electrode current collector are stacked in sequence. The positive electrode current collector may include an area coated with the positive electrode active material layer, and a positive electrode non-coating portion area non-coated with the positive electrode active material layer, and the positive electrode non-coating portion area may function as a positive electrode tab. The negative electrode current collector may include an area coated with the negative electrode active material layer, and a negative electrode non-coating portion area non-coated with the negative electrode active material layer, and the negative electrode non-coating portion area may function as a negative electrode tab. The separator may be disposed between the positive electrode current collector and the negative electrode current collector so as to prevent the electrode current collectors having different polarities from being in contact with each other. The first positive electrode lead 111 may have one end that is coupled to the positive electrode tab, and the first negative electrode lead 112 may have one end that is coupled to the negative electrode tab.

Referring to (c) of FIG. 2, like the first battery cell 110, the second battery cell 210 may include a second electrode assembly, a second pouch type case 213, a second positive electrode lead 211, and a second negative electrode lead 212. The description of the second battery cell 210 will be replaced with the description of the first battery cell 110.

The first battery cell 110 and the second battery cell 210 may be distinguished according to a positive electrode active material with which the positive electrode current collector is coated.

The positive electrode active material of the first battery cell 110 may be a NCM positive electrode active material including nickel, cobalt, and manganese components, or a NCMA positive electrode active material including nickel (Ni), cobalt (Co), manganese (Mg), and aluminum (Al) components. In particular, as the nickel content of the positive electrode active material is higher, a battery cell having higher energy density may be manufacture, and the nickel may account for 60% or greater of the positive electrode active material.

The positive electrode active material of the second battery cell may be a LFP positive electrode active material including lithium (Li), phosphate (H₃PO₄), and iron (Fe) components. The positive electrode active material of the second battery cell may not include the nickel component.

The first battery cell 110 of which the positive electrode active material includes nickel may have a more amount of heat generation per unit volume than the second battery cell 210.

The first battery module 100 may further include a first reference cell 120.

Referring to (b) of FIG. 2, the first reference cell 120 may be a cell that includes more electrodes than the first battery cell 110. The first reference cell 120 is not limited thereto, and, for example, a first reference electrode 123 may be added to the first battery cell 110.

The first reference cell 120 may include a first working electrode 121 corresponding to a positive electrode, a first counter electrode 122 corresponding to a negative electrode, and the first reference electrode 123.

The first reference cell 120 may be a component that is coupled to the first battery module 100 and provided to estimate an accurate value of a potential difference of the first battery cell 110. As the first battery cell 110 has a two-electrode structure of a negative electrode and a positive electrode, an error in potential difference may occur due to a resistance value of an electrolyte, etc., when the potential difference is measured. In the first reference cell 120, current flows between the first working electrode 121 and the first counter electrode 122, and hardly flows through the first reference electrode 123. Thus, there is little change in potential of the first reference electrode 123, and thus the first reference electrode 123 may serve as a reference when a first reference potential difference of the first reference cell 120 is calculated. Here, the first reference potential difference may be accurately measured regardless of a value of the current between the first working electrode 121 and the first counter electrode 122.

The first reference potential difference may be calculated by measuring relative potential values of the first working electrode 121 and the first counter electrode 122 on the basis of the first reference electrode 123. More specifically, the first reference potential difference may be calculated by adding a difference value of the first working electrode 121 and the first reference electrode 123 and a difference value of the first reference electrode 123 and the first counter electrode 122.

The second battery module 200 may further include a second reference cell 220. The second reference cell 220 may be a cell that includes more electrodes than the second battery cell 210. The second reference cell 220 is not limited thereto, and, for example, a second reference electrode 223 may be added to the second battery cell 210.

Referring to (d) of FIG. 2, the second reference cell 220 may be a component that is coupled to the second battery module 200 and provided to estimate an accurate value of a potential difference of the second battery cell. Like the first reference cell 120, the second reference cell 220 may include a second working electrode 221 corresponding to a positive electrode, a second counter electrode 222 corresponding to a negative electrode, and the second reference electrode 223.

As the second battery cell 210, like the first battery cell 110, has a two-electrode structure of a negative electrode and a positive electrode, an error in potential difference may occur due to a resistance value of an electrolyte when the potential difference is measured. In the second reference cell 220, current flows between the second working electrode 221 and the second counter electrode 222, and hardly flows through the second reference electrode 223. Thus, there is little change in potential of the second reference electrode 223, and thus the second reference electrode 223 may serve as a reference when a second reference potential difference of the second reference cell 220 is calculated. Here, the second reference potential difference may be accurately measured regardless of a value of the current between the second working electrode 221 and the second counter electrode 222.

The second reference potential difference may be calculated by measuring relative potential values of the second working electrode 221 and the second counter electrode 222 on the basis of the second reference electrode 223. More specifically, the second reference potential difference may be calculated by adding a difference value of the second working electrode 221 and the second reference electrode 223 and a difference value of the second reference electrode 223 and the second counter electrode 222.

The pack housing 300 may mean a frame that provides an outer appearance of the battery pack 10.

The pack housing 300 may include an accommodation part 310 and a partition part 320.

The accommodation part 310 may provide an inner space of the pack housing 300 with a space in which the first battery module 100 and the second battery module 200 are accommodated together.

The accommodation part 310 may have an inner wall that is defined by the partition part 320.

In the pack housing 300, the accommodation part 310 may be provided in plurality. The plurality of accommodation parts 310 may be partitioned from each other by the partition part 320.

The plurality of accommodation parts 310 may be arranged in a plurality of rows and a plurality of columns in the pack housing 300.

The partition part 320 may include a first partition unit 321 and a second partition unit 322.

The first partition unit 321 may be disposed to be parallel to a longitudinal direction of the first or second battery module, and partition adjacent accommodation parts 310 from each other.

The second partition unit 322 may be disposed in a direction perpendicular to the first partition unit 321, and partition adjacent accommodation parts 310 from each other.

The partition part 320 may be made of a thermal insulation material. More specifically, each of the first partition unit 321 and the second partition unit 322 may be made by including a thermal insulation material. The partition part 320 may be made of a thermal insulation material so that heat is prevented from being transferred between the battery modules 100 and 200, which are disposed in different accommodation parts 310 from each other, through the partition part 320. This may enable heat transfer between a pair of the first battery module 100 and the second battery module 200 that are accommodated in the accommodation part 310. In particular, the second battery module 200 may hardly generate heat despite use thereof such as charging and discharging the second battery cell 210, and thus cool the first battery module 100.

The pair of the first battery module 100 and the second battery module 200, which are accommodated in one accommodation part 310, may be disposed to have respective surfaces facing each other that are in contact with each other so that heat transfer actively occurs between the first battery module 100 and the second battery module 200.

As one embodiment according to the present invention, each of the first battery module 100 and the second battery module 200 may be coated with a thermally conductive compound that improves effects of the heat transfer between the surfaces, which are in contact with each other, and allows the first battery module 100 and the second battery module 200 to be in close contact with each other. For example, the thermally conductive compound may be but is not limited to a thermoplastic resin, such as polyamide, polyphenylene sulfide (PPS), polyolefin, polyacetal, polycarbonate (PC), polyoxymethylene (POM), polystyrene (PS), polyethylene terephthalate (PET), polybutylene terephthalate (PBT), polyester, liquid crystal polyester (LCP), ethylene-vinyl acetate copolymer, acrylonitrile-butadiene-styrene (ABS), polysulfone, polyimide, and fluoroplastics, a thermosetting resin, such as epoxy resin, thermosetting polyimide, phenolic resin, urea resin, melamine resin, unsaturated polyester resin, diallylphtalate resin, silicone resin, and thermosetting urethane resin, or a compound thereof.

As another embodiment according to the present invention, each of the surfaces, which are in contact with each other, of the first battery module 100 and the second battery module 200 may be provided to include a heat dissipating material having high thermal conductivity. For example, the heat dissipating material may be but is not limited to a ceramic or synthetic resin material.

As still another embodiment according to the present invention, the surfaces, which are in contact with each other, of the first battery module 100 and the second battery module 200 may be provided with a groove and a protrusion that have shapes corresponding to each other, so as to increase a contact surface area.

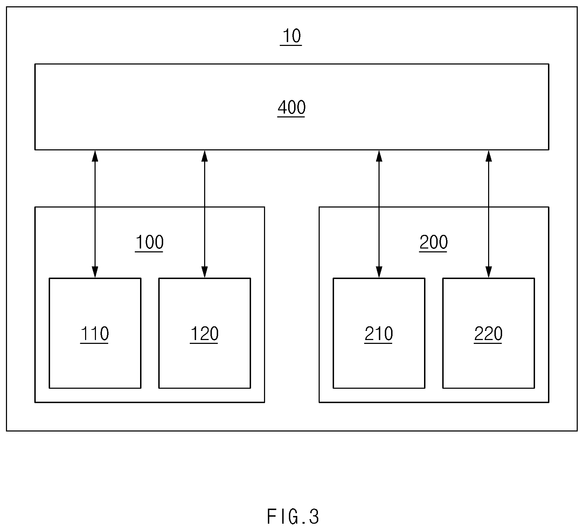

Referring to FIG. 3, a pack battery management system (BMS) 400 may be coupled to the pack housing, and monitor voltages, current, temperature, available capacity, or the like of each of the first battery cell 110, the second battery cell 210, the first reference cell 120, and the second reference cell 220, which are included in the first battery module 100 or the second battery module 200, so as to control and manage the battery cells 110 and 210 to prevent overcharge and overdischarge thereof.

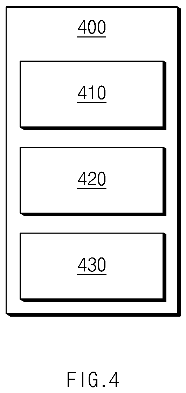

Referring to FIG. 4, the pack BMS 400 may include a measuring part 410, a calculating part 420, and a controller 430.

The measuring part 410 may measure a first potential difference of the first battery cell 110, a first reference potential difference of the first reference cell 120, a second potential difference of the second battery cell 210, and a second reference potential difference of the second reference cell 220.

The measuring part 410 may measure a voltage of the first positive electrode lead 111 and a voltage of the first negative electrode lead 112 of the first battery cell 110, and the calculating part 420 may calculate a voltage corresponding to a difference between the measured voltages to measure the first potential difference.

The measuring part 410 may measure a voltage of the first working electrode 121, a voltage of the first counter electrode 122, and a voltage of the first reference electrode 123 of the first reference cell 120. The calculating part 420 may calculate a voltage corresponding to a difference between the voltage of the first working electrode 121 and the voltage of the first reference electrode 123, calculate a voltage corresponding to a difference between the voltage of the first reference electrode 123 and the voltage of the first counter electrode 122, and add the calculated voltages to measure the first reference potential difference.

The calculating part 420 may calculate a deviation between the calculated first reference potential difference and first potential difference. When the deviation is calculated, the calculating part 420 may calculate an estimated value of available capacity of the first battery module 100, in which the plurality of first battery cells 110 are included, by using a predetermined calculation method.

The measuring part 410 may measure a voltage of the second positive electrode lead 211 and a voltage of the second negative electrode lead 212 of the second battery cell 210, and the calculating part 420 may calculate a voltage corresponding to a difference between the measured voltages to measure the second potential difference.

The measuring part 410 may measure a voltage of the second working electrode 221, a voltage of the second counter electrode 222, and a voltage of the second reference electrode 223 of the second reference cell 220. The calculating part 420 may calculate a voltage corresponding to a difference between the voltage of the second working electrode 221 and the voltage of the second reference electrode 223, calculate a voltage corresponding to a difference between the voltage of the second reference electrode 223 and the voltage of the second counter electrode 222, and add the calculated voltages to measure the second reference potential difference.

The calculating part 420 may calculate a deviation between the calculated second reference potential difference and second potential difference. When the deviation is calculated, the calculating part 420 may calculate an estimated value of available capacity of the second battery module 200, in which the plurality of second battery cells 210 are included, by using a predetermined calculation method.

The pack BMS 400 may control the available capacity of the first battery module 100 and the available capacity of the second battery module 200 to be the same as or similar to each other. More specifically, the controller 430 may control the calculated available capacity of the first battery module 100 and the calculated available capacity of the second battery module 200 to be the same as or similar to each other. Accordingly, the first battery module 100 that generates more heat than the second battery module 200 may be safely controlled to prevent thermal runaway of the first battery module 100.

The controller 430 may predict a degree of degradation, replacement time, lifetime, and the like of the battery cell based on the estimated values of the available capacity of the first battery module 100 and the second battery module 200.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

10: Battery pack
100: First battery module
110: First battery cell
111: First positive electrode lead
112: First negative electrode lead
113: First pouch type case
120: First reference electrode
121: First working electrode
122: First counter electrode
123: First reference electrode
200: Second battery module
210: Second battery cell
211: Second positive electrode lead
212: Second negative electrode lead
213: Second pouch type case
220: Second reference electrode
221: Second working electrode
222: Second counter electrode
223: Second reference electrode
300: Pack housing
310: Accommodation part
320: Partition part
321: First partition unit
322: Second partition unit
400: Pack BMS
410: Measuring part
420: Calculating part
430: Controller

## Claims

1. A battery pack comprising:
a first battery module comprising a plurality of first battery cells;
a second battery module comprising a plurality of second battery cells;
a pack housing comprising an accommodation part in which the first battery module and the second battery module are accommodated together; and
a pack battery management system (BMS) configured to control available capacity of the first battery module and available capacity of the second battery module to be the same as each other,
wherein the first battery module is coolable by the second battery module.

2. The battery pack of claim 1, wherein each of the first battery cells has a more amount of heat generation per unit volume than each of the second battery cells.

3. The battery pack of claim 1, wherein the first battery module further comprises a first reference cell in which a first reference electrode is added to the first battery cell,
wherein the pack BMS is configured to measure a first reference potential difference of the first reference cell and a first potential difference of the first battery cell.

4. The battery pack of claim 3, wherein the first reference cell comprises a first working electrode corresponding to a positive electrode, a first counter electrode corresponding to a negative electrode, and the first reference electrode,
wherein the pack BMS is configured to calculate the first reference potential difference based on a difference in potential between the first reference electrode and the first working electrode and a difference in potential between the first reference electrode and the first counter electrode.

5. The battery pack of claim 4, wherein the pack BMS is configured to estimate the available capacity of the first battery module based on a deviation between the first reference potential difference and the first potential difference.

6. The battery pack of claim 5, wherein the first battery module further comprises a second reference cell in which a second reference electrode is added to the second battery cell,
wherein the pack BMS is configured to measure a second reference potential difference of the second reference cell and a second potential difference of the second battery cell.

7. The battery pack of claim 6, wherein the second reference cell comprises a second working electrode corresponding to a positive electrode, a second counter electrode corresponding to a negative electrode, and the second reference electrode,
wherein the pack BMS is configured to calculate the second reference potential difference based on a difference in potential between the second reference electrode and the second working electrode and a difference in potential between the second reference electrode and the second counter electrode.

8. The battery pack of claim 7, wherein the pack BMS estimates the available capacity of the second battery module based on a deviation between the second reference potential difference and the second potential difference.

9. The battery pack of claim 1, wherein a positive electrode active material of the first battery cell comprises nickel, cobalt, and manganese materials, and
a positive electrode active material of the second battery cell comprises lithium, phosphate, and iron materials.

10. The battery pack of claim 9, wherein the positive electrode active material of the second battery cell does not comprise nickel.

11. The battery pack of claim 1, wherein the first battery module and the second battery module, which are accommodated in the accommodation part, have respective surfaces facing each other that are in contact with each other.

12. The battery pack of claim 11, wherein each of the surfaces, which are in contact with each other, of the first battery module and the second battery module is coated with a thermally conductive compound.

13. The battery pack of claim 11, wherein each of the surfaces, which are in contact with each other, of the first battery module and the second battery module comprises a heat dissipating material.

14. The battery pack of claim 13, wherein the heat dissipating material is a ceramic or synthetic resin.

15. The battery pack of claim 1, wherein a pair of the first battery module and the second battery module are accommodated in the accommodation part.

16. The battery pack of claim 15, further comprising a partition part configured to define an inner wall of the accommodation part,
wherein the accommodation part is provided in plurality, and the partition part partitions the plurality of accommodation parts from each other.

17. The battery pack of claim 16, wherein the partition part is made of a thermal insulation material.

18. The battery pack of claim 16, wherein the partition part comprises:
a first partition unit disposed to be parallel to a longitudinal direction of the first or second battery module; and
a second partition unit disposed in a direction perpendicular to the first partition unit.

19. The battery pack of claim 16, wherein the first battery module and the second battery module, which are disposed in different accommodation parts facing each other on the basis of the partition part, are disposed to face each other.
